# EUROPÄISCHE PATENTSCHRIFT

(11) **EP 2 789 876 B1**
(45) Veröffentlichungstag und Bekanntmachung des Hinweises auf die Patenterteilung: **01.05.2019**
(21) Anmeldenummer: 14168506.5
(22) Anmeldetag: 26.07.2011
(51) Int. Cl.: F16H 57/04, B60K 17/34

(54) **Power-Takeoff-Unit (PTU) für einen Antriebsstrang eines Kraftfahrzeugs sowie dessen Aufbau zur verlustminimierten Bedarfsbeölung**
Power take off unit (PTU) for a drive train of a motor vehicle and structure of same for loss-minimising oiling as needed
Unité de prise de force (PTU) de la chaîne cinématique d'un véhicule automobile et son montage pour la lubrification en fonction du besoin avec un minimum de pertes

(30) Priorität: 03.08.2010 DE 102010036826
(43) Veröffentlichungstag der Anmeldung: 15.10.2014
(62) Teilanmeldung aus: 11175456.0
(73) Patentinhaber: GKN Driveline Köping AB, 731 36 Köping (SE)
(72) Erfinder: Nett, Hans-Peter, 53518 Adenau (DE); Göttert, Christoph, 50670 Köln (DE); Haupt, Jan, 51515 Kürten (DE); Kämmerer, Michael, 51427 Bergisch Gladbach (DE)
(74) Vertreter: Bungartz Christophersen Partnerschaft mbB Patentanwälte

(56) Entgegenhaltungen:
- EP-A1- 0 850 797
- EP-A2- 1 916 448
- EP-A2- 2 161 155
- DE-A1-102008 000 777

## Beschreibung

Die Erfindung betrifft eine Power-Takeoff-Unit (PTU) für einen Antriebsstrang eines Kraftfahrzeugs mit einem permanent angetriebenen Primärteil für den permanenten Antrieb von Primärantriebsrädern sowie mit einem Sekundärteil für den Antrieb von Sekundärantriebsrädern, wobei der Sekundärteil im Bedarfsfall vom Primärteil und den Sekundärantriebsrädern abkoppelbar bzw. diesem zuschaltbar ist.

Der vorstehend beschriebene Aufbau eines Antriebsstrangs ist aus der deutschen Offenlegungsschrift DE 10 2008 002 844 A1 bekannt. Diese Druckschrift offenbart eine Power-Takeoff-Unit gemäß dem Oberbegriff des Anspruchs 1 sowie einen Antriebsstrang gemäß dem Oberbegriff des Anspruchs 7. Dort ist ein Antriebsstrang für ein Kraftfahrzeug gezeigt, der eine differentiallose Querausgleichseinheit offenbart, bei der die Ausgangswellen zum Antrieb der Antriebsräder über zwei individuell ansteuerbare Seitenwellenkupplungen angetrieben werden. Die Seitenwellenkupplungen sind von Lamellenpaketen gebildet, die zur Kühlung und Schmierung beölt werden müssen. Die Außenlamellen des Lamellenpakets sind drehfest mit einer von der Eingangswelle angetriebenen Zwischenwelle - in der DE 10 2008 002 844 A1 ist dies die Tellerradträgerwelle - verbunden und fördern durch Ihre spezielle Ausgestaltung das Öl nach außen in eine im Gehäuse vorgesehene Ölauffangtasche, von wo das Öl über Gehäusebohrungen zum Inneren des Lamellenpakets zurückfließt und dort erneut von den Lamellen erfasst wird, so dass sich - bezogen auf ein Lamellenpaket einer Seitenwellenkupplung - ein innerer Ölkreislauf ausbildet.

Wegen dieses inneren Ölkreislaufs verweilt ein großer Teil des zur Kühlung und Schmierung aufgewendeten Ölvolumens lange in dem beschriebenen inneren Ölkreislauf, ohne das sich das Ölvolumen ausreichend mit "frischem" Öl vermischt oder durch dieses ersetzt wird. Ölvolumen, dass gerade erst zwischen den Kupplungslamellen Wärme aufgenommen hat, wird unmittelbar wieder in zu den Lamellen zurückgeführt. Die Kupplungstemperatur steigt daher überproportional zu der Kühlleistung, die mit der in der Ausgleichseinheit vorhandenen Ölmenge erreichbar wäre.

Die überproportionale Erwärmung der Kupplungen bringt Nachteile hinsichtlich des Verschleißverhaltens und somit der Lebensdauer sowie hinsichtlich des Ansprechund Regelverhaltens mit sich.

Ein weiterer Nachteil der in der DE 10 2008 002 844 A1 gezeigten Ausführung ist, dass die Kupplungspakete der Seitenwellenkupplungen im Öl stehen, um dieses zu erfassen und zur Ölauffangtasche zu fördern. Die hiermit einhergehenden Planschverluste erhöhen die Verlustleistung des Antriebstrangs.

Hinsichtlich der unerwünschten Verlustleistung kommt hinzu, dass selbst in dem in der DE 10 2008 002 844 A1 beschriebenen Fall, dass der Sekundärteil des Antriebsstrangs von den Antriebsrädern entkoppelt ist und die Seitenwellenkupplungen vollständig geöffnet sind, die Sekundärantriebsräder im Fahrbetrieb auf der Straße abrollen und den Innenlamellenträger und die damit drehfest verbundenen Innenlamellen schleppen. Die Innenlamellen stehen jedoch in ständigem Kontakt mit dem Öl, da sie darin eintauchen. Nicht nur der Bereich des äußerst schmalen Lüftspalts (Spaltbreite ca. 0,1 mm) zwischen Innen- und Außenlamellen, der sich unmittelbar im Öl befindet, ist mit Öl gefüllt, sondern das Öl wird zudem durch die rotierenden Innenlamellen auch in den nicht im Öl stehenden Zwischenraum zwischen Innen- und Außenlamellen der Lamellenkupplung gefördert. Die in der Folge erzeugte Flüssigkeitsreibung bzw. hydrodynamische Reibung überträgt wiederum das von den Sekundärantriebsrädern auf die Innenlamellen wirkende Schleppmoment auf die Außenlamellen und treibt diese hierdurch an. Sobald diese aber zu rotieren beginnen, fördern sie ihrerseits wiederum Öl in den zuvor beschriebenen inneren Ölkreislauf und erhöhen ihrerseits somit das geförderte Ölvolumen und damit die Reib- bzw. Verlustleistung erneut. Der unerwünschte Effekt verstärkt sich selbst.

Versuche haben gezeigt, dass aufgrund dieses Effekts der Sekundärantriebsstrang entgegen den in der DE 10 2008 002 844 A1 gemachten Annahmen auch dann nicht zum Stillstand kommt, wenn er vom Primärteil des Antriebsstrangs entkoppelt ist. Durch die in der DE 10 2008 002 844 A1 vorgeschlagene reibungsarme Ausgestaltung der Oberflächen der Innenlamellen lassen sich die negativen Auswirkungen dieses Effekts nur sehr geringfügig verringern. Außerdem führen reibungsarme Oberflächen der Innenlamellen zu einem deutlich schlechteren Ansprech- und Regelverhalten des Kupplungspakets. Ein Nachteil, der schwerer wiegt als die bei der Verlustleistung durch diese Maßnahme erreichbaren Vorteile.

Aus den Druckschriften EP 0 850 797 A1 und EP 1 916 448 A1 sind Power-Take-Off Einheiten für an Zapfwellen anzuschließende Anbaugeräte bei Land- und Industriemaschinen bekannt, bei denen eine Bremsvorrichtung die Zapfwelle stillzulegen vermag. Für den Einsatz in Antriebssträngen von Kraftfahrzeugen mit zuschaltbarem Sekundärteil sind diese Power-Take-Off Einheiten nicht geeignet.

Vor diesem Hintergrund macht es sich die Erfindung zur Aufgabe, eine Power-Takeoff-Unit (PTU) für einen Antriebsstrang der vorstehend beschriebenen Art zur Verfügung zu stellen, die zur Vermeidung vorstehend beschriebenen Nachteile beizutragen vermag. Insbesondere soll das in der DE 10 2008 002 844 A1 beschriebene Beölungskonzept hinsichtlich der hierdurch verursachten Verlustleistung bei vom Primärteil des Antriebstrangs entkoppeltem Sekundärteil unter Zuhilfenahme der PTU optimiert werden, ohne Kompromisse beim Ansprech- und Regelverhalten der Kupplungspakete eingehen zu müssen.

Die Aufgabe wird erfindungsgemäß dadurch gelöst, dass die Power-Takeoff-Unit eine zusätzliche Abbremsvorrichtung aufweist, mittels der der Sekundärteil des Antriebsstrangs abgebremst werden kann, wenn dieser vom Primärteil und den Sekundärantriebsrädern entkoppelt ist.

Trotz weiterer Verbesserungsmaßnahmen, die eine Ölfördereinrichtung mit einem entfernt von einer Kupplungseinrichtung angeordneten Ölförderrad betreffen und die nachfolgend noch beschrieben werden, hat sich gezeigt, dass das Beölungskonzept noch weiter optimiert werden kann. Der eingangs erwähnte, sich selbst verstärkende Effekt einer durch die Schleppmomente der nicht angetriebenen, jedoch auf der Straße abrollenden Räder verursachten unerwünschten Kupplungsbeölung trotz entkoppeltem Sekundärteil des Antriebsstrangs konnte bei Versuchen nämlich trotz der genannten, die getrennte Anordnung des Ölförderrads betreffenden Abhilfemaßnahmen beobachtet werden.

In dem Moment, in dem die Kupplungsvorrichtung zur Entkopplung des Sekundärteils vom Primärteil des Antriebsstrangs geöffnet wird, wird durch das rotierende Ölförderrad, unter anderem aufgrund eines masseträgheitsbedingten Nachlaufens, noch Öl gefördert. Zudem befindet sich trotz geöffneter Kupplungen noch Öl zwischen den beiden Kupplungsseiten, so dass die Kupplung, obwohl sie sich im geöffneten Zustand befindet, eine Schleppleistung von der einen Kupplungsseite auf die andere Kupplungsseite überträgt. Letztere Kupplungsseite treibt als Antriebsglied des Sekundärteils des Antriebsstrangs wiederum das Ölförderrad an, das in der Folge die Ölförderung nicht wie eigentlich gewünscht komplett einstellt, sondern weiter Öl zur Kupplungsvorrichtung fördert. In Folge des nicht unterbrochenen Ölflusses stellt sich unterstützt durch die über das Schleppmoment eingebrachte Schleppleistung ein Gleichgewichtszustand ein, der den völligen Stillstand der Antriebsglieder des Sekundärteils des Antriebsstrangs verhindert. Der Sekundärteil dreht sich, obwohl dieser nicht in den Antriebsleistungsfluss integriert ist, ständig mit und verursacht Verlustleistung.

Um dieses Gleichgewicht zu unterbrechen, ist die Abbremsvorrichtung vorgesehen, mittels der das Ölförderrad bei nicht bestehendem Beölungsbedarf der Kupplungsvorrichtung stillgelegt werden kann. Mit einer solchen Abbremsvorrichtung lässt sich der sich ansonsten einstellende Gleichgewichtszustand wirksam verhindern, denn die Abbremsvorrichtung bewirkt, dass - je nachdem, wo und wie die Abbremsvorrichtung eingreift - die Schleppleistung von der einen Kupplungsseite nicht mehr auf die andere Kupplungsseite übertragen werden kann, weil bereits diese gebremst wird. Sobald das Ölförderrad aber stillsteht wird der Ölstrom unterbrochen und die unerwünschte Beölung im geschleppten Zustand wird beendet. Die Kupplungsvorrichtung läuft sich zügig trocken und die beiden Kupplungsseiten drehen deutlich verlustärmer.

Da das Bremsmoment, das die Abbremsvorrichtung zur Stilllegung des Ölförderrades bereitstellen muss, nur gering ist, lässt sich die Abbremsvorrichtung auch unter Zuhilfenahme kleinerer Antriebsstrangkomponenten des Sekundärteils realisieren.

Beispielsweise kann vorgesehen sein, dass die Bremsvorrichtung die Schiebemuffe einer Synchronisierungseinrichtung umfasst, die mit einem feststehenden Teil des Kraftfahrzeugs über eine Reibfläche zusammenwirkt und ein Bremsmoment zur Abbremsung der stillzulegenden Antriebsglieder des Sekundärteils zu erzeugen vermag. Dabei kann sich die Schiebemuffe zur Erzeugung des Reibmoments zum Beispiel gegen einen Lagerbock oder ein sonstiges Bauteil abstützen, das das Bremsmoment abzustützen vermag. Alternativ oder ergänzend kann die Schiebemuffe zur Erzeugung des Reibmoments eine einer Schaltgabel der Synchronisierungseinrichtung zugewandte Reibfläche aufweisen.

Ein Antriebsstrang der vorstehend beschriebenen Art kann neben der PTU eine Ausgleichseinheit eines Antriebsstrangs eines Kraftfahrzeugs mit einem Gehäuse und mit Antriebsgliedern, die eine Eingangswelle sowie zumindest eine erste Ausgangswelle umfassen, wobei die erste Ausgangswelle mit einer zweiten Ausgangswelle oder mit der Eingangswelle oder mit einer von der Eingangswelle angetriebenen Zwischenwelle über eine Kupplungsvorrichtung koppelbar ist, die über eine unmittelbar oder mittelbar über die Antriebsglieder angetriebene Fördereinrichtung mit Öl zu versorgen ist, wobei die Ölfördereinrichtung von einem von der Kupplungsvorrichtung entfernt angeordneten Ölförderrad gebildet ist. Die Anordnung des Ölförderrades entfernt von der Kupplungsvorrichtung führt dazu, dass das Öl nach einem Durchlauf durch die zu beölende Kupplungsvorrichtung stets in den Ölsumpf der Ausgleichseinheit zurückfließt, bevor es erneut in den Ölkreislauf eingespeist wird. Damit ist eine ausreichende Durchmischung des gesamten Ölvolumens und in der Folge die Ausnutzung der maximalen Kühlleistung der Gesamtölmenge jederzeit gewährleistet, was wiederum thermische Belastung der Kupplungsvorrichtungen verringert.

Bei dem Ausgleichsgetriebe kann es sich sowohl um eine Quer- als auch um eine Längsausgleichseinheit handeln. Besonders bevorzugt wird die Erfindung jedoch bei einer Querausgleichseinheit eingesetzt, insbesondere bei einer differentiallosen, rein reibschlüssig wirkenden Querausgleichseinheit, bei der die Seitenwellen der Antriebsräder über Seitenwellenkupplungen in den Antriebsleistungsfluss eingekoppelt werden, wie es in der DE 10 2008 002 844 bereits gezeigt ist. Grundsätzlich ist die Erfindung aber auch bei herkömmlichen, formschlüssig wirkenden Längs- und Querdifferentialen einsetzbar, um Kupplungspakete der Differentialsperren, sei es in Welle-Welle Anordnung oder in Welle-Korb Anordnung, zu beölen. Die Zwischenwelle wird bei einem herkömmlichen Differential von dem Differentialkorb gebildet.

Die genannte Ausgestaltung ermöglicht es außerdem, das Ölförderrad derart auszubilden, dass es das Kühl- und Schmieröl aus einem Ölsumpf mit einem unterhalb der Kupplungsvorrichtung liegenden Ölspiegels zu fördern vermag. Die Kupplungsvorrichtung, also insbesondere auch die geschleppten Kupplungskomponenten, können sich so dauerhaft oberhalb des Ölspiegels befinden. Selbst der radial außen liegende Außenlamellenträger und die Außenlamellen verursachen weder im Belastungsfall, also beispielsweise bei zugeschaltetem Sekundärteil des Antriebsstrangs, noch im geöffneten Modus, also bei abgeschaltetem Sekundärteil, Planschverluste.

Bevorzugt ist das Ölförderrad von einem auf der Zwischenwelle angeordneten Tellerrad gebildet, über das als Bestandteil des Winkelgetriebes die von der Eingangswelle eingebrachte Antriebsleistung auf die Zwischenwelle übertragen wird. Wenn aufgrund der Dimensionierung des Tellerrades das Tellerrad selbst nicht über einen ausreichenden Durchmesser verfügt, auch in einen unterhalb der Kupplungsvorrichtung liegenden Ölsumpf einzutauchen, kann vorgesehen sein, dass das Ölförderrad das auf der Zwischenwelle angeordnete Tellerrad umfasst, wobei das Tellerrad radial nach außen durch einen Ölförderring erweitert ist. Der Ölförderring kann als integraler, werkstoffeinstückiger Bestandteil des Tellerrades ausgebildet sein. Aus Gewichts- und Kostengründen und um zu beschleunigende und zu verzögernde Massen gering zu halten, bietet es sich jedoch an, den Ölförderring als separates Bauteil aus einem leichteren Material zu fertigen und mit dem Tellerrad zu verbinden, insbesondere mit diesem zu verschrauben.

Die Realisierung des Ölförderrades unter Zuhilfenahme eines im Leistungsfluss stehenden Zahnrads des Ausgleichsgetriebes ist nicht zwingend erforderlich. Es kann auch ein vom Tellerrad separates Ölförderrad auf der Eingangswelle oder der Zwischenwelle vorgesehen sein.

Um den Ölfluss zu erhöhen, können an der Innenseite des Gehäuses zumindest teilumlaufende Schottwände vorgesehen sein, die das seitliche Abfließen des vom Ölförderrad mitgenommenen Öls minimieren.

Alternativ zur Abbremsvorrichtung kann auch eine Entkopplungsvorrichtung vorgesehen sein, mittels der das Ölförderrad bei nicht bestehendem Beölungsbedarf der Kupplung stillgelegt werden kann. Auch mit einer solchen Entkopplungseinrichtung kann das Ölförderrad bei nicht bestehendem Beölungsbedarf der Kupplungseinrichtung stillgelegt werden und lässt sich der sich ansonsten einstellende Gleichgewichtszustand wirksam verhindern, denn die Entkopplungseinrichtung bewirkt wie die alternativ vorgesehene Abbremseinrichtung, dass die Schleppleistung von der einen Kupplungsseite nicht mehr auf die andere Kupplungsseite übertragen werden kann, weil durch das Entkoppeln des Ölförderrads von dessen Antriebsglied die Schleppleistung nicht auf das Ölförderrad übertragen wird. Sobald das Ölförderrad aber stillsteht wird der Ölstrom unterbrochen und die unerwünschte Beölung im geschleppten Zustand wird beendet. Die Kupplungsvorrichtung läuft sich zügig trocken und die beiden Kupplungsseiten drehen deutlich verlustärmer.

Der Erfindungsgedanke, die Ölfördereinrichtung durch eine Abbrems- oder Entkopplungseinrichtung stillzulegen, lässt sich nicht nur bei Ölfördereinrichtungen realisieren, die durch ein Ölförderrad gebildet sind. Dieser Erfindungsgedanke lässt sich vielmehr auch auf sonstige Ölfördereinrichtungen übertragen, die mit anderen Mitteln Öl zur Kupplungsvorrichtung fördern.

Daher wird sowohl als zur eingangs erwähnten Erfindung gehörig als auch als eigenständige Erfindung ein Aufbau eines Antriebsstrangs für ein Kraftfahrzeug angesehen, wobei der Antriebsstrang ein Ausgleichsgetriebe mit Antriebsgliedern aufweist, die eine Eingangswelle sowie zumindest eine erste Ausgangswelle umfassen, wobei die erste Ausgangswelle mit einer zweiten Ausgangswelle oder mit der Eingangswelle oder mit einem von der Eingangswelle angetriebenen Zwischenglied über eine zu beölende Kupplungsvorrichtung koppelbar ist, die über eine unmittelbar oder mittelbar über die Antriebsglieder angetriebene Fördereinrichtung mit Öl zu versorgen ist, wobei im Antriebsstrang eine Abbrems- oder Entkopplungsvorrichtung vorgesehen ist, mittels der die Fördereinrichtung bei nicht bestehendem Beölungsbedarf der Kupplungsvorrichtung stillgelegt werden kann.

Die zuvor beschriebene Bremsvorrichtung kann nicht nur an der PTU vorgesehen sein oder auf Antriebsglieder der Ausgleichseinheit wirken. Insbesondere bei einem Antriebsstrang, der einen permanent angetriebenen Primärteil für den permanenten Antrieb von Primärantriebsrädern sowie einen Sekundärteil für den Antrieb von Sekundärantriebrädern aufweist, wobei der Sekundärteil im Bedarfsfall vom Primärteil und den Sekundärantriebsrädern abkoppelbar bzw. diesen zuschaltbar ist, kann die Abbremsvorrichtung auf beliebige Teile des Sekundärteils des Antriebstrangs wirken. Die Bremsvorrichtung muss also nicht notwendiger Weise Bestandteil der Ausgleichseinheit sein, sie muss lediglich irgendwo im stillzulegenden Sekundärteil des Antriebstrangs ein ausreichendes Reibmoment erzeugen.

Daher wird sowohl als zur eingangs erwähnten Erfindung gehörig als auch als eigenständige Erfindung ein Aufbau eines Antriebsstrangs für ein Kraftfahrzeug angesehen, bei dem der Antriebsstrang einen permanent angetriebenen Primärteil für den permanenten Antrieb von Primärantriebsrädern sowie einen Sekundärteil für den Antrieb von Sekundärantriebrädern aufweist, wobei der Sekundärteil im Bedarfsfall vom Primärteil und den Sekundärantriebsrädern abkoppelbar bzw. diesen zuschaltbar ist, und wobei im Sekundärteil zumindest eine Kupplungsvorrichtung vorgesehen ist, deren zumindest eine Kupplungsseite über die im Fahrzeugbetrieb auch bei abgekoppeltem Sekundärteil abrollenden Sekundärachsantriebsräder geschleppt wird und die bei zugeschaltetem Sekundärteil über eine unmittelbar oder mittelbar über Antriebsglieder des Sekundärteils angetriebene Fördereinrichtung mit Öl zu versorgen ist, wobei eine Abbremseinrichtung vorgesehen ist, mittels der der Sekundärteil im vom Primärteil abgekoppelten Zustand abgebremst werden kann.

Zusammenfassend wird ein überarbeitetes Beölungskonzept einer Ausgleichseinheit eines Antriebsstrangs eines Kraftfahrzeugs mit einer im Fahrbetrieb zu beölenden Kupplungseinrichtung sowie hiermit in Zusammenhang stehende Maßnahmen vorgeschlagen. Um Schleppmomente, die von außen auf die Kupplungseinrichtung einwirken und zu erhöhter Verlustleistung führen, zu unterbinden, wenn diese betriebszustandsbedingt nicht benötigt wird, sind Maßnahmen vorgesehen, die das Trockenlaufen der Kupplungsvorrichtung fördern. Zu den Maßnahmen gehören die räumlichfunktionale Trennung der Ölfördereinrichtung von der Kupplungsvorrichtung und das Vorsehen einer Abbrems- oder Entkopplungsvorrichtung, mittels der die Ölfördereinrichtung bei nicht vorhandenem Ölbedarf stillgelegt werden kann.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Figur 1 einen aus dem Stand der Technik bekannten Antriebsstrangaufbau mit permanent angetriebenen Primärteil und einem im Bedarfsfall zuschaltbaren Sekundärteil mit einer differantiallosen Ausgleichseinheit zum Antrieb der Sekundärantriebsräder,
Figur 2 eine differentiallose Ausgleichseinheit während des Betriebs mit einem vom Tellerrad gebildeten Ölförderrad zur Kupplungsbeölung,
Figur 3 eine alternative Ausführungsform der differentiallosen Ausgleichseinheit im Stillstand mit einem schematisch dargestellten, an dem Tellerrad befestigten Ölförderring, und
Figur 4 eine für einen Antriebsstrang entsprechend Figur 1 vorgesehene Power-Takeoff-Unit (PTU) mit einer zusätzlichen Abbremsvorrichtung zum Abbremsen des Sekundärteils des Antriebsstrangs.

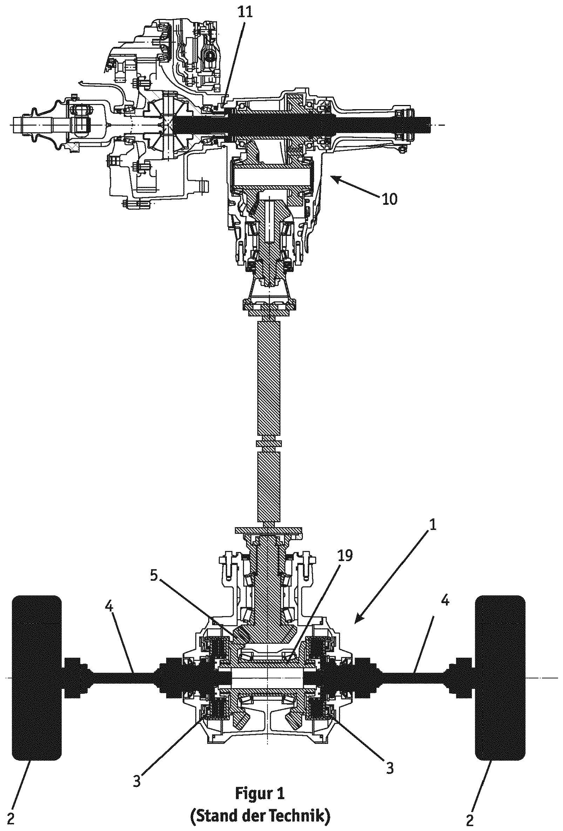

In Figur 1 ist ein aus dem Stand der Technik bekannter Antriebsstrangaufbau mit permanent angetriebenen Primärteil und einem nur im Bedarfsfall angetriebenen Sekundärteil mit einer differantiallosen Ausgleichseinheit 1 zum Antrieb der Sekundärantriebsräder 2 gezeigt. Der Sekundärteil des Antriebsstrangs, dessen Antriebsglieder vom Primärteil je nach Bedarfsfall abkoppelbar bzw. diesem zuschaltbar sind, sind schräg schraffiert gekennzeichnet, während diejenigen Antriebsglieder, die mit dem Sekundärteil im Fahrbetrieb zur Leistungsübertragung zusammenwirken und permanent rotieren, durchgehend schwarz gekennzeichnet sind.

Die Ausgleichseinheit 1 ist eine differentiallose Ausgleichseinheit, bei der der Leistungsfluss über zwei individuell ansteuerbare Kupplungsvorrichtungen, gebildet durch Seitenwellenkupplungen 3, und über die Halbwellen 4 auf die Sekundärantriebsräder 2 übertragen wird. Die Seitenwellenkupplungen 3, die von reibschlüssig wirkenden Lamellenkupplungen gebildet sind, gleichen dabei nicht nur die unterschiedlichen Abrollwege der Sekundärachsantriebsräder 2 bei Kurvenfahrten aus, sondern werden auch zur aktiven Beeinflussung des dynamischen Fahrverhaltens genutzt. Im Betrieb sind die Kupplungen mit Kühl- bzw. Schmieröl zu beölen.

Versuche mit dem in Figur 1 dargestellten System haben gezeigt, dass selbst dann, wenn der Sekundärteil des Antriebsstrangs vom Primärteil entkoppelt ist, insbesondere wenn dieser während der Fahrt und bei einer Geschwindigkeit ab ca. 50 km/h entkoppelt wird, die Antriebsglieder des Sekundärteils nicht wunschgemäß stillstehen, sondern durch die von den Sekundärantriebsrädern 4 in die Seitenwellenkupplungen 3 eingebrachte Schleppleistung weiterrotieren und somit Verlustleistung verursachen. Dies liegt, wie eingangs beschrieben, insbesondere an dem im Stand der Technik gewählten Beölungskonzept.

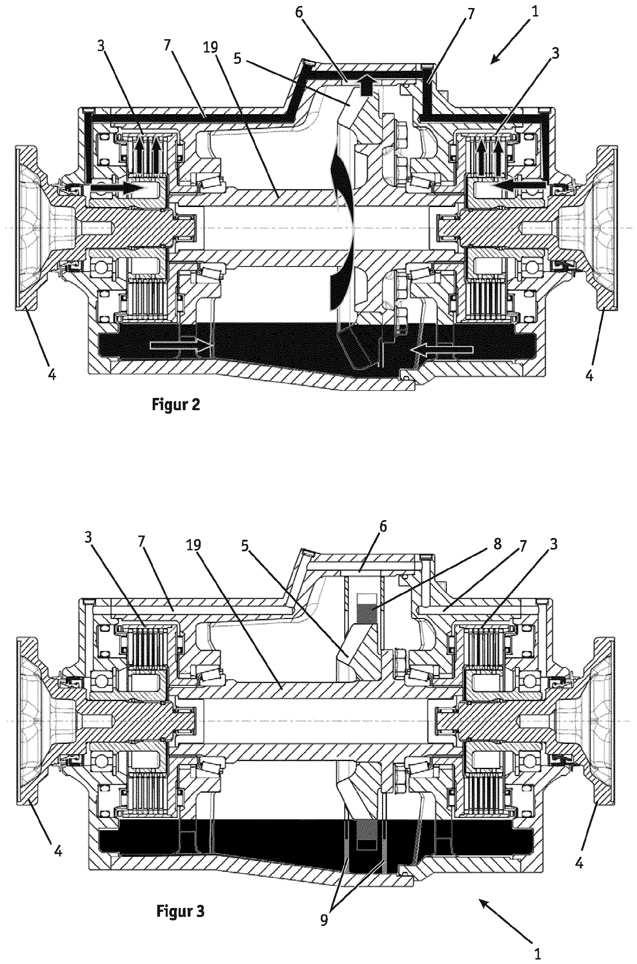

Figur 2 zeigt eine differentiallose Ausgleichseinheit 1 während des Betriebs mit einer über ein vom Tellerrad 5 gebildeten Ölförderrad zur Kupplungsbeölung. Das Tellerrad 5 schaufelt das Öl aufgrund seiner Rotation an der Gehäuseinnenwandung entlang zu einer im Gehäuse vorgesehenen Ölauffangtasche 6. Von dort aus gelangt es über Ölzuführungskanäle 7 zu den Seitenwellenkupplungen 3. Das Tellerrad 5 ist auf der Zwischenwelle 19 angeordnet und wird über eine Eingangswelle (nicht gezeigt) angetrieben.

Durch die Nutzung des Tellerrads als Ölförderrad bzw. Schaufelrad ist gegenüber einer Lösung, bei der die Lamellen der Seitenwellenkupplungen das Öl überwiegend fördern, gewährleistet, dass das von den Kupplungen zurückfließende Öl sich - bevor es erneut dem Ölkreislauf zugeführt wird - im Ölsumpf sammelt und mit dem gesamten Ölvolumen vermischt. Es wird verhindert, dass sich ein innerer Ölkreislauf ausbildet, aufgrund dessen das Öl, nachdem es durch die Kupplungen hindurch geflossen ist, diesen wieder unmittelbar zuführt wird, so dass sich dass Öl in der Folge überproportional erwärmen würde.

Figur 3 zeigt die Ausgleichseinheit aus Figur 2, wobei bei der in Figur 3 gezeigten Ausführung die Ausgleichseinheit stillsteht. Es ist zu erkennen, dass der Durchmesser des Tellerrads 5 nicht ausreicht, um in das Öl einzutauchen. Daher ist auf dem Tellerrad 5 ein nur schematisch dargestellter Ölförderring vorgesehen, der den Wirkdurchmesser des Tellerrads 5 in Bezug auf die Ölförderfähigkeit radial erweitert. Bei dem Ölförderring 8 muss es sich nicht notwendiger Weise um ein ringförmiges Bauteil handeln, sondern es können auch einzelne, nicht zusammenhängende Schaufeln am Tellerrad 5 angeordnet sein, die sich über dessen Umfang verteilen.

Ebenfalls nur schematisch dargestellt ist eine teilumlaufende Ölschottwand 9, die verhindert, dass das Öl beim Fördervorgang aus dem Ölsumpf zu der darüber liegenden Ölauffangtasche 6 fliehkraftbedingt seitlich abließen kann. Die Anwendung einer Schottwand 9 kann nicht nur bei einem Ölförderring verwendet werden. Sie eignet sich in gleicher Weise auch für eine Ausgestaltung nach Figur 2 oder für sonstige Anordnungen von Ölförderrädern auf der Zwischenwelle. Die Schottwand 9 ist bevorzugt beidseitig des Ölförderrades vorgesehen und kann entweder durch ein separat einzusetzendes Teil oder direkt durch einen nach innen ragenden Vorsprung oder eine Rippe des Gehäuses gebildet sein, wobei Bauraum- und Montageaspekte selbstverständlich zu berücksichtigen sind.

Außerdem ist in Figur 2 und Figur 3 zu erkennen, dass der Ölspiegel im Ölsumpf sowohl im Betriebszustand als auch bei Stillstand unterhalb der Seitenwellenkupplungen liegt. Auch dies trägt zur Verlustleistungsminimierung bei, da die von den Halbwellen 4 geschleppten Kupplungsglieder nicht im Öl stehen und somit kein Öl zwischen die Kupplungslamellen fördern können. In dem Fall, dass der Sekundärteil des Antriebstrangs vom Primärteil entkoppelt ist, können die Kupplungen also vollständig trocken und somit reibungsarm laufen.

Trotz der räumlichen-funktionalen Trennung von Kupplungsvorrichtung und Ölfördereinrichtung kann es, wie eingangs beschrieben, dazu kommen, dass der Sekundärteil des Antriebsstrangs nach Trennung vom Primärteil insbesondere als Folge des fortlaufenden Nachlaufens von Öl in die Kupplungsvorrichtung weiterrotiert und Verlustleistung verursacht. Um dies zu unterbinden und um zu ermöglichen, dass der Ölfluss vollständig unterbunden werden kann, ist eine Abbremsvorrichtung vorgesehen, die nachfolgend beispielhaft anhand einer speziellen Ausgestaltung der in Figur 1 gezeigten Power-Takeoff-Unit 10 (PTU) erläutert wird.

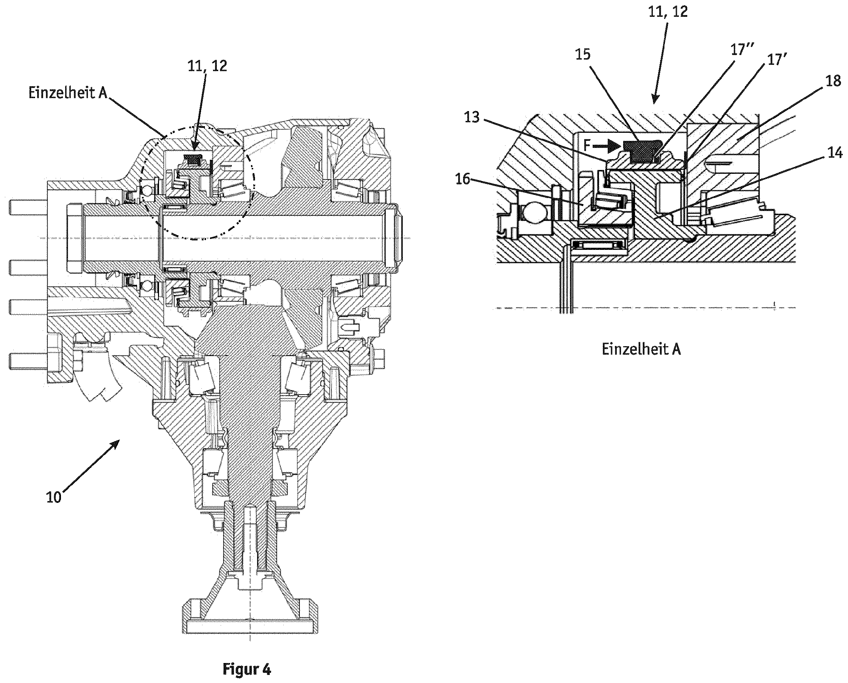

Damit der in Figur 1 dargestellte Sekundärteil des Antriebsstrangs dem Primärteil des Antriebstrangs auch während der Fahrt zugeschaltet oder von diesem entkoppelt werden kann, weist die PTU 10 eine Synchronisierung 11 auf. Figur 4 zeigt eine in einem Antriebsstrang entsprechend Figur 1 einsetzbare PTU 10 mit einer zusätzlichen Abbremsvorrichtung 12 zum Abbremsen des Sekundärteils des Antriebsstrangs, wobei die Abbremsvorrichtung 12 an der Synchronisierung 11 vorgesehen ist.

Die Synchronisierung 11 weist eine Schiebemuffe 13 auf, die drehfest aber axial verschieblich auf eine Führungsmuffe 14 aufgeschoben ist. In der Schiebemuffe 13 liegt eine Schaltgabel 15 auf, mittels der die Schiebemuffe 13 betätigbar ist. In Figur 4 ist die Schiebemuffe 13 in einer Position gezeigt, in der der Sekundärteil des Antriebsstrangs vom Primärteil entkoppelt ist. Um den Sekundarteil des Antriebsstrangs dem Primärteil zuzuschalten, müsste die Schiebemuffe in Figur 4 also nach links verschoben werden, um mit dem Mitnehmerring 16 in Eingriff zu kommen.

Seitlich neben der Schiebemuffe 13 ist eine schematisch dargestellte, zusätzliche Reibfläche 17' vorgesehen, die mit einem feststehenden Bauteil, das ein Bremsmoment abzustützen vermag (zum Beispiel Lagerbock 18), zusammenwirkt. Die Reibfläche ist bevorzugt an der Schiebemuffe 13 angeordnet, kann aber ebenso gut zusätzlich oder alternativ auch am feststehenden Bauteil vorgesehen sein.

Eine weitere Reibfläche 17" kann zusätzlich oder alternativ zu der Reibfläche 17' zwischen Schiebemuffe 13 und Schaltgabel 15 wirken. Auch hier kann die Reibfläche 17" an einem der beiden oder an beiden Bauteilen vorgesehen sein.

Wird nun der Sekundärteil des Antriebsstrangs vom Primärteil durch Verschieben der Synchronisierung in die in Figur 4 gezeigte Position abgekoppelt, so kann dadurch, dass die Schiebemuffe 13 bzw. die Schaltgabel 15 gezielt gegen die Reibflächen 17' bzw. 17" angestellt werden, ein Reibmoment erzeugt werden, durch den die Antriebsglieder des Sekundärteils des Antriebsstrangs abgebremst werden. Dies unterbricht den Ölfluss in der in den Figuren 2 und 3 gezeigten Ausgleichseinheit, so dass die Kupplungen trockenlaufen können und die Übertragung des Schleppmoments von den Sekundärantriebsrädern über die Halbwellen in die sekundärteilseitige Kupplungsvorrichtung deutlich minimiert wird. Die Kupplungslamellen laufen in der Folge äußert reibungsarm, der Sekundärteil des Antriebstrangs steht still.

Die in Figur 4 gezeigte Synchronisierung 11 ist außerdem auch in Folge ihrer speziellen Anordnung besonders reibungsarm. Während üblicherweise die Führungsmuffe 14 auf den permanent rotierenden Antriebsgliedern des Primärteils des Antriebsstrangs positioniert ist und der Mitnehmerring 16 sich auf den beim Synchronisierungsvorgang zu beschleunigenden Antriebsgliedern des Sekundärteils des Antriebsstrangs befindet, ist dies bei der in Figur 4 dargestellten Variante genau umgekehrt. Dies führt dazu, dass, wenn der Sekundärteil des Antriebsstrangs entkoppelt ist und steht, auch die Führungsmuffe 14 und die Schiebemuffe 13 still stehen, so dass zwischen Schaltgabel 15 und Schiebmuffe keine Reibung und somit keine Verlustleistung auftreten kann. Außerdem ermöglicht erst diese Ausgestaltung ein Abbremsen des Sekundärteils des Antriebstrangs über die Synchronisierung, da andernfalls über die Schiebemuffe oder die Schaltgabel kein auf die Antriebsglieder des Sekundärteils des Antriebsstrangs wirkendes Bremsmoment erzeugbar wäre. Diese Anordnung der Komponenten der Synchronisierung wird unabhängig von dem Beölungskonzept und dem sonstigen Aufbau des Antriebsstrangs als eigenständige Erfindung angesehen.

### Bezugszeichenliste

- 1: Ausgleicheinheit
- 2: Sekundärantriebsräder
- 3: Seitenwellenkupplung
- 4: Halbwellen
- 5: Tellerrad
- 6: Ölauffangtasche
- 7: Ölzuführungskanäle
- 8: Ölförderring
- 9: Schottwand
- 10: Power-Takeoff-Unit (PTU)
- 11: Synchronisierung
- 12: Abbremsvorrichtung
- 13: Schiebemuffe
- 14: Führungsmuffe
- 15: Schaltgabel
- 16: Mitnehmerring
- 17', 17": Reibfläche
- 18: Lagerbock
- 19: Zwischenwelle

## Patentansprüche

1. Power-Takeoff-Unit (PTU) (10), eingerichtet zur Verwendung bei einem Antriebsstrang eines Kraftfahrzeugs mit einem permanent angetriebenen Primärteil für den permanenten Antrieb von Primärantriebsrädern sowie mit einem Sekundärteil für den Antrieb von Sekundärantriebsrädern, wobei der Sekundärteil im Bedarfsfall von den Sekundärantriebsrädern (2) abkoppelbar bzw. diesen zuschaltbar ist, wobei die die Power-Takeoff-Unit (10) eingerichtet ist, den Sekundärteil im Bedarfsfall vom Primärteil abzukoppeln bzw. diesem zuzuschalten,
**dadurch gekennzeichnet, dass**
die Power-Takeoff-Unit (10) eine zusätzliche Abbremsvorrichtung (12) aufweist, mittels der Sekundärteil des Antriebsstrangs abgebremst werden kann, wenn dieser vom Primärteil und den Sekundärantriebsrädern (2) entkoppelt ist.

2. Power-Takeoff-Unit nach Anspruch 1, **dadurch gekennzeichnet, dass** die Abbremsvorrichtung (12) an einer Synchronisierung (11) der Power-Takeoff-Unit (10) vorgesehen ist.

3. Power-Takeoff-Unit nach einem der Ansprüche 1 oder 2, **dadurch gekennzeichnet, dass** die Abbremsvorrichtung (12) eine Schiebemuffe (13) einer Synchronisierungseinrichtung umfasst, die mit einem feststehenden Teil des Kraftfahrzeugs über eine Reibfläche (17', 17") zusammenwirkt und ein Bremsmoment zur Abbremsung der stillzulegenden Antriebsglieder zu erzeugen vermag.

4. Power-Takeoff-Unit nach einem der Ansprüche 2 oder 3, **dadurch gekennzeichnet, dass** ein Mitnehmerring (16) auf den permanent rotierenden Antriebsgliedern des Primärteils des Antriebsstrangs positioniert ist und eine Führungsmuffe (14) sich auf den beim Synchronisierungsvorgang zu beschleunigenden Antriebsgliedern des Sekundärteils des Antriebsstrangs befindet.

5. Power-Takeoff-Unit nach einem der Ansprüche 3 bis 4, **dadurch gekennzeichnet, dass** sich die Schiebemuffe (13) zur Erzeugung des Reibmoments gegen einen Lagerbock (18) abstützt.

6. Power-Takeoff-Unit nach einem der drei vorhergehenden Ansprüche, **dadurch gekennzeichnet, dass** sich die Schiebemuffe (13) zur Erzeugung des Reibmoments gegen eine Schaltgabel (15) der Synchronisierungseinrichtung abstützt.

7. Antriebsstrang für ein Kraftfahrzeug, wobei der Antriebsstrang einen permanent angetriebenen Primärteil für den permanenten Antrieb von Primärantriebsrädern sowie einen Sekundärteil für den Antrieb von Sekundärantriebsrädern (2) aufweist, wobei der Sekundärteil im Bedarfsfall von den Sekundärantriebsrädern (2) abkoppelbar bzw. diesen zuschaltbar ist, und wobei die Power-Takeoff-Unit (10) eingerichtet ist, den Sekundärteil im Bedarfsfall vom Primärteil abzukoppeln bzw. diesem zuzuschalten,
**dadurch gekennzeichnet, dass**
im Antriebsstrang eine Power-Takeoff-Unit (10) mit einer Abbremsvorrichtung (12) vorgesehen ist, mittels der der Sekundärteil im vom Primärteil und von den Sekundärantriebsrädern (2) abgekoppelten Zustand abgebremst werden kann.

8. Antriebstrang nach dem vorhergehenden Anspruch und mit einer Power-Takeoff-Unit (10) nach einem der Ansprüche 1 bis 6.

## Claims

1. Power Takeoff Unit (PTU) (10), designed for the use in a drive train of a motor vehicle having a permanently driven primary section for the permanent drive of primary drive wheels as well as with a secondary section for driving secondary drive wheels, wherein the secondary section can be uncoupled from the secondary drive wheels (2) or can be connected with these when necessary, wherein the Power Takeoff Unit (10) is designed for uncoupling or connecting the secondary section from or with the primary section when necessary, **characterised in that**
the Power Takeoff Unit (10) has an additional braking device (12), with which the secondary section of the drive train can be braked when the same is uncoupled from the primary section and the secondary drive wheels (2).

2. Power Takeoff Unit according to claim 1, **characterised in that** the braking device (12) is envisaged on a synchronisation (11) of the Power Takeoff Unit (10).

3. Power Takeoff Unit according to one of the claims 1 or 2, **characterised in that** the braking device (12) comprises a sliding sleeve (13) of a synchronisation means, which cooperates with a fixed part of the motor vehicle via a friction surface (17 , 17), and can generate a braking torque for braking the drive members to be immobilised.

4. Power Takeoff Unit according to one of the claims 2 or 3, **characterised in that** a follower ring (16) is positioned on the permanently rotating drive members of the primary section of the drive train and a guide sleeve (14) is located on the drive members of the secondary section of the drive train to be accelerated during the synchronisation process.

5. Power Takeoff Unit according to one of the claims 3 to 4, **characterised in that** the sliding sleeve (13) is supported against a bearing block (18) for generating the friction torque.

6. Power Takeoff Unit according to one of the three preceding claims, **characterised in that** the sliding sleeve (13) is supported against a selector fork (15) of the synchronisation means for generating the friction torque.

7. Drive train for a motor vehicle, wherein the drive train has a permanently driven primary section for permanently driving of primary drive wheels as well as a secondary section for driving secondary drive wheels (2), wherein the secondary section can be uncoupled from the secondary drive wheels (2) or can be connected with these when necessary, and wherein the Power Takeoff Unit (10) is equipped for uncoupling or connecting the secondary section from or with the primary section when necessary,**characterised in that** a Power Takeoff Unit (10) with a braking device (12) is envisaged in the drive train, by means of which the secondary section can be braked in a condition that is uncoupled from the primary section and from the secondary drive wheels (2).

8. Drive train according to the preceding claim and with a Power Takeoff Unit (10) according to one of the claims 1 to 6.

## Revendications

1. Unité de prise de force (PTU) (10) conçue pour être utilisée avec un groupe propulseur d un véhicule automobile avec une partie primaire entraînée en permanence pour la transmission permanente de roues motrices primaires ainsi qu avec une partie secondaire pour la transmission de roues motrices secondaires, la partie secondaire pouvant être, si nécessaire, désaccouplée des roues motrices secondaires (2) ou étant enclenchable par celles-ci, I unité de prise de force (10) étant conçue de telle sorte que la partie secondaire peut être, si nécessaire, désaccouplée de la partie primaire ou enclenchée par celle-ci, **caractérisée en ce que** I unité de prise de force (10) présente un dispositif de freinage (12) supplémentaire au moyen duquel la partie secondaire du groupe propulseur peut être décélérée lorsque celle-ci est désaccouplée de la partie primaire et des roues motrices secondaires (2).

2. Unité de prise de force selon la revendication 1, **caractérisée en ce que** le dispositif de freinage (12) est prévu à une synchronisation (11) de I unité de prise de force (10).

3. Unité de prise de force selon I une des revendications 1 ou 2, **caractérisée en ce que** le dispositif de freinage (12) comprend un manchon coulissant (13) d un dispositif de synchronisation qui interagit sur une surface de frottement (17 , 17) avec une partie fixe du véhicule automobile et permet de générer un couple de freinage pour la décélération des éléments d entraînement à immobiliser.

4. Unité de prise de force selon I une des revendications 2 ou 3, **caractérisée en ce qu** une bague d entraînement (16) est positionnée sur les éléments d entraînement en rotation permanente de la partie primaire du groupe propulseur et un manchon de guidage (14) se trouve sur les éléments d entraînement à accélérer de la partie secondaire du groupe propulseur au moment de la synchronisation.

5. Unité de prise de force selon I une des revendications 3 à 4, **caractérisée en ce que** le manchon coulissant (13) s appuie contre un support (18) pour générer le couple de frottement.

6. Unité de prise de force selon I une des trois revendications précédentes, **caractérisée en ce que** le manchon coulissant (13) s appuie contre une fourchette de commande (15) du dispositif de synchronisation pour générer le couple de frottement.

7. Groupe propulseur pour un véhicule automobile, le groupe propulseur présentant une partie primaire entraînée en permanence pour la transmission permanente de roues motrices primaires ainsi qu une partie secondaire pour la transmission de roues motrices secondaires (2), la partie secondaire pouvant être, si nécessaire, désaccouplée des roues motrices secondaires (2) ou étant enclenchable par celles-ci, et I unité de prise de force (10) étant conçue de telle sorte que la partie secondaire peut être, si nécessaire, désaccouplée de la partie primaire ou enclenchée par celle-ci, **caractérisé en ce qu** une unité de prise de force (10) est prévue avec un dispositif de freinage (12) dans le groupe propulseur au moyen duquel la partie secondaire peut être décélérée à létat désaccouplé de la partie primaire et des roues motrices secondaires (2).

8. Groupe propulseur selon la revendication précédente et avec une unité de prise de force (10) selon l une quelconque des revendications 1 à 6.
